# EUROPEAN PATENT SPECIFICATION

(11) **EP 1 946 922 B1**
(45) Date of publication and mention of the grant of the patent: **19.08.2009**
(21) Application number: 08250223.8
(22) Date of filing: 17.01.2008
(51) Int. Cl.: B32B 27/10, B32B 27/20, B32B 27/36, B65D 65/46

(54) **Paper cup**
Papierbecher
Gobelet en papier

(30) Priority: 18.01.2007 JP 2007009060
(43) Date of publication of application: 23.07.2008
(73) Proprietor: Yamamatsu, Takeyuki, Tokyo (JP)
(72) Inventor: Yamamatsu, Takeyuki, Tokyo (JP); Uemura, Masaaki, Tsu City Mie Prefecture (JP)
(74) Representative: Tollett, Ian

(56) References cited:
- JP-A- 2005 096 814
- DATABASE WPI Week 200413 Derwent Publications Ltd., London, GB; AN 2004-125709 XP002479990 & JP 2003 165181 A (OJI PAPER CO) 10 June 2003 (2003-06-10)
- DATABASE WPI Week 200652 Derwent Publications Ltd., London, GB; AN 2006-506997 XP002479991 & JP 2006 192806 A (TOSERO KK) 27 July 2006 (2006-07-27)
- DATABASE WPI Week 200707 Derwent Publications Ltd., London, GB; AN 2007-063017 XP002479992 & JP 2006 321554 A (TOSERO KK) 30 November 2006 (2006-11-30)

## Description

The present invention relates to a biodegradable paper cup formed with a sheet of polylactic acid (PLA) laminated paper, and in particular to a paper cup employing a sheet of single side PLA laminated paper as its material so as to avoid adhesives when forming the cup. It should be noted that the term "laminated paper" or "laminated paper sheet" used in this specification and claims is synonymously used for "extrusion coated paper" or "extrusion coated paper sheet" in the field. In this specification, therefore, a polymer laminated paper means a sheet of paper that is applied extrusion coating of the polymer.

At present, the most common paper cup is formed with a sheet of PE laminated paper in which polyethylene (PE) is laminated on either one side or both sides of a paper sheet. However, the use of petroleum synthetic resins such as polyethylene always involves problems of environmental pollution at the time of disposal. In recent years, attention has focused on a laminated paper sheet using a biodegradable polylactic acid (PLA) resin instead of polyethylene as laminating materials in the laminated paper manufacturing industry As a laminated paper sheet, a single side PLA laminated paper - that is, one side of a paper sheet is laminated with a PLA resin - and a double side PLA laminated paper - that is, both sides of a paper sheet are laminated with a PLA resin - are well-known.

When manufacturing a paper cup with a laminated paper sheet, the body part of a paper cup is typically made by forming a laminated paper sheet in a cylindrical shape, overlapping its two opposing ends, and bonding the opposing ends by heat pressure welding. Thereby, the front surface and the rear surface of the laminated paper sheet come in contact with each other at the overlapping part. In this case, if the material of a cup is a double side PLA laminated paper sheet, a PLA resin layer of the front side and a PLA resin layer of the rear side come in contact at the overlapping part.

Therefore, sufficient bonding can be achieved by simultaneously applying heat and pressure- welding to this overlapping part.

However, when a single side PLA laminated paper sheet is used for a cup material, a PLA resin layer comes in contact with a paper layer at such an overlapping part. Therefore, both layers cannot bond sufficiently even if heat and pressure-welding are simultaneously applied to the overlapping part. In other words, a paper cup cannot be manufactured by an ordinary means if a single side PLA laminated paper sheet is used for the material of the cup.

In order to bond the afore-mentioned PLA resin layer and a paper layer of a paper cup using a single side PLA laminated paper sheet as its material, a PLA resin solution or emulsion is generally used as an adhesive (see Japanese Publication JP 2005096814). In this prior art, opposing ends of the cup body formed in a cylindrical shape, which comprises a single side PLA laminated paper sheet, are overlapped and bonded by an application of the aforementioned PLA series adhesives. Then, heat and pressure welding are applied to the overlapping part so that the above PLA series adhesives work well with a PLA resin layer and a paper layer of a laminated paper sheet, which results in sufficient bonding of both layers.

However, a method using PLA series adhesives is not highly appreciated as a process of applying adhesives has to be done before a heat seal process (a process of adhering opposing ends) for manufacturing a paper cup.

### Referenced Prior Art

Japanese Publication JP 2005096814
Patent Application Publication US 2006/0051603 A1

The inventors of the present invention examined methods of manufacturing a paper cup from a single side PLA laminated paper sheet without using adhesives. As a result, they have discovered that a paper cup can be manufactured without using adhesives by adding specific compounds to the PLA resin layer of a single side PLA laminated paper sheet in advance.

The invention addresses the provision of a paper cup in which no adhesive is used for bonding the body of the cup, and the bonding process of the cup body is completed by head pressure welding.
A paper cup in accordance with the invention comprises a sheet of polylactic acid laminated paper obtained by laminating one side of the sheet with a polylactic acid resin compounded with either barium sulfate or precipitated barium sulfate.

According to the invention, a process to coat adhesives can be omitted from the paper cup manufacturing process. Thereby, a paper cup can be manufactured from a single side PLA laminated paper sheet by the same process as manufacturing the one comprising a single side or a double side PE laminated paper sheet or a double side PLA laminated paper sheet.

In addition, barium sulfate or precipitated barium sulfate used in this invention harms neither the natural environment nor the biodegradation of polylactic acid resin. Therefore, a paper cup of this invention can contribute to reduction of environmental pollution. Furthermore, as a paper cup can be manufactured from a single side PLA laminated sheet without using adhesives in accordance with the invention, it can promote adoption of a biodegradable paper cup in the hot beverage cup industry.

In the invention, the same base paper sheet for manufacturing a single side or a double side PE laminated paper sheet or a double side PLA laminated paper sheet can be used to make an inventive single side PLA laminated paper sheet on which a polylactic acid resin is laminated. In other words, a single side PLA laminated paper sheet according to this invention is substantially the same as a single side PLA laminated paper sheet used in the industry except that the former advantageously contains either barium sulfate or precipitated barium sulfate in a PLA, resin layer.

There is no particular restriction as to a polylactic acid resin for laminating a sheet of paper. Any type of polylactic acid resin conventionally used for manufacturing a single side or a double side PLA laminated paper sheet can be used.

When laminating a polylactic acid resin on a single side of a base paper, barium sulfate or precipitated barium sulfate should be compounded with the polylactic acid resin in advance. In this instance, barium sulfate preferably refers to elutriated barium sulfate obtained from finely crushed barite, and precipitated barium sulfate preferably refers to barium sulfate obtained by a precipitation method in which sodium sulfate solution is added to barium sulfate solution. A mixing ratio of barium sulfate or precipitated barium sulfate can be selected within a range of 0.5-3 parts by weight (wt) per 100 parts by wt of a polylactic acid resin. When a mixing ratio is less than 0.5 parts by wt, the effect that the invention expects is not achieved well. On the other hand, when a mixing ratio exceeds 3 parts by wt, it can affect extrusion laminating or coating of a PLA resin negatively.

A polylactic acid resin compounded with barium sulfate or precipitated barium sulfate is extruded and laminated on one side of a base paper sheet in accordance with a conventional method. There is no specific condition applied to the laminating process of the invention. General conditions conventionally used in the industry can be employed in this invention.

The thus manufactured single side PLA laminated paper sheet is supplied to an ordinary paper cup making machine to form a paper cup in which risk of detachment of the bonding part of the cup body can be eliminated.
A number of preferred embodiments of the invention will now be described with reference to the following Examples.

### Example 1

A mixture A was prepared by compounding barium sulfate of 0.6 part by wt with a polylactic acid resin of 100 parts by wt. Then, a sheet of single side PLA laminated paper was obtained by laminating the mixture A of 20µm in thickness on one side of a base paper sheet (270 g/m²) by using an extruded laminating machine.

The thus obtained single side PLA laminated paper sheet was supplied to a paper cup making machine to manufacture a paper cup A.

### Example 2

A mixture B was prepared by compounding barium sulfate of 0.8 part by wt with a polylactic acid resin of 100 parts by wt. Then, a sheet of single side PLA laminated paper was obtained by laminating the mixture B of 18 µm in thickness on one side of a base paper sheet (270 g/m²) by using the same extruded laminating machine.

The thus obtained single side PLA laminated paper sheet was supplied to the same paper cup making machine used in Example 1 to manufacture a paper cup B.

### Comparison Example 1

A sheet of single side laminated paper was obtained by laminating polyethylene (low density polyethylene) of 15 µm in thickness on one side of a base paper sheet (210 g/m²). The thus obtained single side laminated paper sheet was supplied to the same paper cup making machine used in Example 1 to manufacture a paper cup X.

### Comparison Example 2

Example 1 was repeated to produce a sheet of single side PLA laminated paper except that barium sulfate was not added to the polylactic acid resin. The thus obtained single side PLA laminated paper sheet was supplied to the same paper cup making machine used in Example 1 to manufacture a paper cup Y.

Seal strength of the joint of the cup body was measured for each paper cup obtained by the above examples and comparison examples as follows: A sample piece whose joint part was 15 mm in length was pulled at a rate of 200 mm per minute by using a load cell tensile tester to measure the adhesive power. The results are shown in Table 1.

**Table 1**

| Sample | Adhesive Power (N /15 mm) |
|---|---|
| Paper Cup A | 203.7 |
| Paper Cup B | 220.0 |
| Paper Cup X | 115.5 |
| Paper Cup Y | Failure of bond |

## Claims

1. A paper cup comprising a polylactic acid laminated paper sheet wherein a polylactic acid resin mixed with barium sulfate or precipitated barium sulfate is laminated on one side of a base paper sheet.

2. A paper cup defined in claim 1, wherein said laminating process of the polylactic acid resin to the one side of a base paper sheet is an extruded lamination.

3. A paper cup defined in claim 1 or 2, wherein a mixing ratio of barium sulfate or precipitated barium sulfate is within a range from 0.5 to 3 parts by weight per 100 parts by weight of a polylactic acid resin.

4. A method of making a paper cup comprising the steps of:
(a) mixing a polylactic resin with barium sulphate or precipitated barium sulphate;
(b) laminating said mixture onto only one side of a base paper sheet; and
(c) forming a cup from said paper sheet.

## Patentansprüche

1. Papierbecher, aufweisend einen mit Polymilchsäure laminierten Papierbogen,
bei welchem ein Polymilchsäureharz gemischt mit Bariumsulfat oder ausgefälltem Bariumsulfat auf einer Seite eines als Grundlage dienenden Papierbogens auflaminiert ist.

2. Papierbecher nach Anspruch 1,
bei welchem der Laminierungsvorgang des Polymilchsäureharzes auf die eine Seite des als Grundlage dienenden Papierbogens eine extrudierte Laminierung ist.

3. Papierbecher nach Anspruch 1 oder 2,
bei welchem ein Mischungsverhältnis von Bariumsulfat oder ausgefälltem Bariumsulfat innerhalb eines Bereiches von 0,5 bis 3 Anteilen pro Gewicht auf 100 Teile pro Gewicht eines Polymilchsäureharzes liegt.

4. Verfahren zur Herstellung eines Papierbechers aufweisend folgende Schritte:
(a) Mischen eines Polymilchsäureharzes mit Bariumsulfat oder ausgefälltem Bariumsulfat;
(b) Laminieren der Mischung auf lediglich eine Seite eines als Grundlage dienenden Papierbogens; und
(c) Formen eines Bechers aus dem Papierbogen.

## Revendications

1. Gobelet de papier comprenant une feuille de papier laminée à l'acide polylactique, dans laquelle une résine à l'acide polylactique mélangée à du sulfate de baryum ou du sulfate de baryum précipité est laminée sur un seul côté d'une feuille de papier de base.

2. Gobelet de papier selon la revendication 1, dans lequel ledit processus de laminage de la résine d'acide polylactique sur un seul côté d'une feuille de papier de base est un laminage extrudé.

3. Gobelet de papier selon la revendication 1 ou 2, dans lequel un rapport de mélange de sulfate de baryum ou de sulfate de baryum précipité se trouve dans une plage comprise entre 0,5 et 3 parties en poids pour 100 parties en poids d'une résine d'acide polylactique.

4. Procédé de fabrication d'un gobelet de papier comprenant les étapes consistant à :
(a) mélanger une résine polylactique avec du sulfate de baryum ou du sulfate de baryum précipité ;
(b) laminer ledit mélange sur un seul côté d'une feuille de papier de base ; et
(c) former un gobelet à partir de ladite feuille de papier.
